# EUROPEAN PATENT SPECIFICATION

(11) **EP 0 361 918 B1**
(45) Date of publication and mention of the grant of the patent: **19.01.1994**
(21) Application number: 89309881.4
(22) Date of filing: 28.09.1989
(51) Int. Cl.: G03B 21/62

(54) **Rear-projection screen**
Durchscheinender Projektionsschirm
Ecran de projection translucent

(30) Priority: 28.09.1988 DK 5413/88
(43) Date of publication of application: 04.04.1990
(73) Proprietor: DAI NIPPON PRINTING CO., LTD., Tokyo (JP)
(72) Inventor: Clausen, Johannes, DK-2920 Charlottenlund (DK); Clausen, Erik, DK-2820 Gentofte (DK)
(74) Representative: Blake, John Henry Francis

(56) References cited:
- EP-A- 0 027 287
- DE-A- 2 411 557
- US-A- 4 340 275
- US-A- 4 509 822
- PATENT ABSTRACTS OF JAPAN, Vol. 5, no. 5 (P-44)(677), 14 January 1981 & JP A 55135830
- PATENT ABSTRACTS OF JAPAN, vol. 7, no. 38 (P-176)(1183), 16 February 1983 & JP A 57191627

## Description

The present invention relates to a transparent rear-projection screen of the kind which on its rear side facing projectors is provided with a set of lenses for paralleling the light coming from the projectors and which on its front side is provided with horizontally spaced apart lenses in the form of upright ridges of triangular cross section and convex lenses between the ridge-shaped lenses.

Rear-projection screens have to a great extent been used for video-projection devices, micro film readers, data machines and flight simulators. Screens of this kind are known from U.S. Patent No. 4,509,822 issued April 9, 1985.

It is known to produce a projected TV-picture by turning three projectors, each of them with their own ground colour (red, green and blue), towards a transparent projection screen.

The three projectors are usually positioned next to each other horizontally, and enlarged pictures produced by the projectors are projected towards the transparent screen. Because the three projectors are placed next to each other, their optical axes form angles with each other. Normally the optical axes form angles with each other from 7° to 12° depending on the size of the picture tubes and the distance from the picture tubes to the transparent screen.

Most designers of projection-TV place the green picture tube between the red and the blue picture tubes so that the optical axis of the green picture is projected perpendicular to the screen. This has the effect that the optical axes of the blue and the red picture tubes deviate with e.g. 9° in comparison with the optical axis of the green picture tube.

If, on the TV concerned a plain mat screen is applied, an observer watching the screen slantwise from the front will see a picture which is either blue or green dominant, depending on whether the observer is closer to the optical axis for the projectors giving a red or a blue picture. This problem is called "colour shadow".

According to the known technique, the lenses on the front side of the rear-projection have been designed so that they are total refracting, that is, the light from the projectors - after having been paralleled, is directed to the flanks of the ridge-shaped lenses in the direction perpendicular to the major plane of the screen and is then refracted out through the top and flanks of the ridge-shaped lenses. With such a known technique, it is difficult to eliminate the problem of the "colour shadow".

In the known rear-projection screen, part of light beams of green colour incident upon the screen normally thereto from the green picture tube is totally reflected by the respective flanks of each ridge-shaped lens and emitted to the front side of the screen through the respective opposite flanks of the ridge-shaped lens. For this reason, the brightness characteristic of the green light as viewed towards the front surface of the screen is that there are two maximum values of brightness in regions offset symmetrically in two opposite directions with respect to an axis of zero-degree angle of observation towards the front surface of the screen. For each of the red and blue colour lights from the picture tubes, there are also two maximum values of brightness. As stated before, the three colour picture tubes have their optical axes forming angles with each other, so that the maximum values of brightness of the three colours appear in mutually shifted fashion due to the difference in the angle of incidence of the lights from the picture tubes. This means that when the screen is observed from the front side at various angles to the screen, the brightness of each colour changes so that the colour shadow is produced.

US-A-4509822 discloses a transparent rear projection screen having a lens system for paralleling light arriving from behind. On the front side of the screen rectilinear lenses extending in the vertical direction (in the position of use on the screen) are provided, the sides of which form a small angle of inclination with respect to the normal to the screen. The sides are totally reflecting to light arriving from behind and between the reflecting lenses further lenses are arranged. In order to compensate for colour shading by the projection of differently coloured television images upon the rear side of the screen, the tops of the reflecting lenses are so shaped and their totally reflecting sides have such an inclination with respect to the normal to the screen, and moreover have such a width that at the most 80% of the light which from behind enters the reflecting lenses is emitted through the tops of the lenses, and that at least 20% of said entering light is emitted through the sides of the lenses.

The present invention addresses the problem of removing the "colour shadow" for an observer watching the picture within approximately ±30° horizontal range in comparison to normal to the screen, i.e., within the horizontal range where the convex lenses operate.

According to the present invention, which is defined in claim 1, there is provided a transparent rear-projection screen of the kind which on its rear side facing projectors is provided with a set of lenses for paralleling the light coming from the projectors and which on its front side is provided with a plurality of parallel elongate lenses in the form of upright ridges of a triangular cross section separated by convex lenses, each of the triangular lenses having light diffusing means on its flanks, characterised in that each triangular lens lies between two convex lenses which are inclined to the median plane of the screen so that the junction between one edge of the adjacent convex lenses with the triangular lens is further spaced from the median plane than the other edge of the respective lenses.

The light diffusing means may be irregularities of the surfaces of the flanks, matted surfaces of the flanks, or a half-refracting coating on the flanks.

The present invention will be described in more detail below with reference to the drawings, in which:
Fig. 1 is a schematic plan view showing three projectors and a rear-projection screen to which light rays are emitted from the projectors;
Fig. 2 is a horizontal section of a rear-projection screen of the present invention;
Fig. 3 is a fragmentary enlarged view of Fig. 2, showing a first embodiment of the present invention;
Fig. 4 is a view similar to Fig. 3 but showing how green and blue rays of light are reflected and refracted;
Fig. 5 is a view similar to Fig. 3 but showing a second embodiment of the present invention;
Fig. 6 is a view explaining how the light beams pass through the rear-projection screen; and
Figs. 7, 8 and 9 show three different examples of practice constructed according to the present invention, respectively.

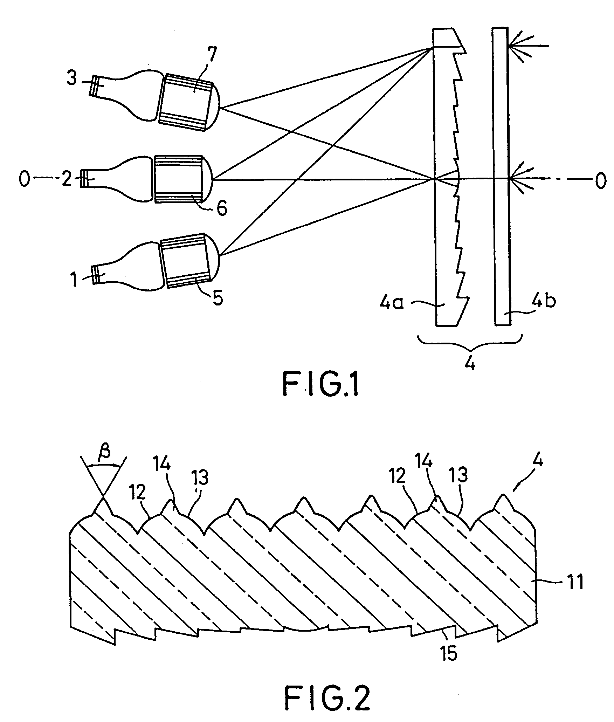

Referring to Fig. 1, there are illustrated three projectors 2, 2 and 3 which project TV-pictures towards the rear side of a projection screen 4. These projectors emit green, red and blue light, respectively. The three projectors are placed next to each other horizontally, so that the middle projector 2, most often the green projector, has its optical axis perpendicular to the screen 4. The screen 4 consists of Fresnel means 4a for paralleling light from the projectors 1, 2 and 3 and lens means 4b for refracting the paralleled light.

The optical axes of the projectors 1 and 3 often form an angle of 6°-10° with the optical axis of the projector 2. By means of the three projectors 1, 2 and 3, as well as projection lenses 5, 6 and 7 mounted in front of them, it is possible to form - proportional to the projectors - an enlarged picture on the screen 4.

According to the known technique, standing to the right or to the left of the screen's centre line O-O, the observer will see a red or a blue dominating picture, respectively, depending on whether the observer is closer to the red or the blue projector's optical axis. An observer being opposite the centre line of the screen will see the screen red dominating at the right side, if this side has the red projectors optical axis directed to the right with respect to the screen's centre line O-O.

It is this colour uncleanness or colour shadow, for an observer watching the picture from the front, that the present invention aims to eliminate.

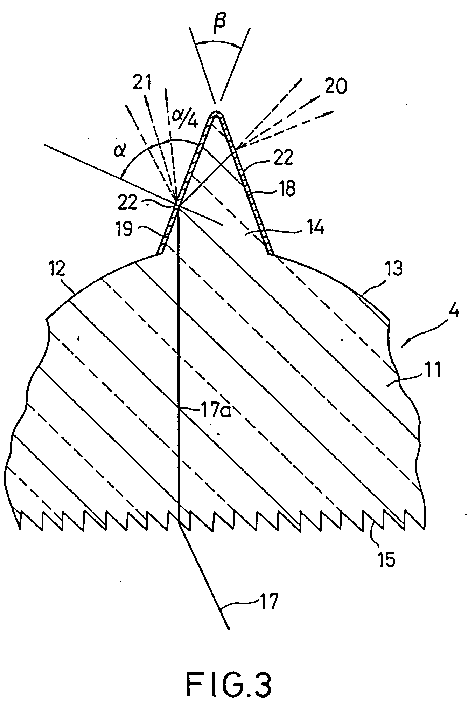

As shown in Figs. 2 and 3, the rear-projection screen 4 has a body 11 of e.g. an acrylic resin, having a rear side with Fresnel lenses 15 facing the projectors. These lenses 15 function to parallel the light from the projectors and direct the light to a front side of the screen 4 in a direction normal to the major plane of the screen. The front side of the screen is provided with a number of horizontally spaced lenses 14 in the form of upright or vertical ridges of a triangular cross section. On the both sides of each ridge-shaped lens 14, there are provided cylindrical convex lenses 12 and 13. The Fresnel lenses 15 correspond to the means 4a shown in Fig. 1 and the lenses 12, 13 and 14 to the lens means 4b in Fig. 1.

As is apparent from Figs. 2 and 3, and the subsequent Figures, the lenses 12 and 13 are inclined to the median plane of the screen. As a result the junction point between the edge of each lens 12, 13 and the respective flank 19, 18 of the adjacent lens 14, is spaced further from the median plane of the screen than is the other edge of the lens 12, 13 i.e. the junction point between a lens 12 and the lens 13 that contacts the adjacent lens 14.

In Fig. 3 the light beam 17 from the projectors is converted by the Fresnel lenses 15 into a beam 17a normal to the major plane of the screen 4. The beam 17a is directed to the side flanks 18 and 19 of the ridge-shaped lens 14 which has an acute angle β.

In the present invention, the side flanks 18 and 19 of each ridge-shaped lens 14 are coated with a half-reflecting layer 22 of lacquer of light diffusing nature. The lacquer has a refractive index equal to or higher than that of the material of the screen 4. The thickness of the layer 22 is from 2 to 3 µ. A wax is added to the lacquer in order to achieve a desired light diffusion. CaCO₃ is further added to the lacquer for achieving a desired light diffusing in the layer 22.

As a consequence of the light diffusion, the light beam 17a is divided into two vector bundles 20 and 21, one bundle 21 passing out through the layer 22 on one flank 19 and the other bundle 20 being produced from light reflected by the flank 19. The vector bundle 21 is deflected at an angle α relative to the normal to the surface of the flank 19 and normally at an angle α/4 relative to the surface of the flank 19. In order to make sure that the angle α/4 is 15°, the angle β must be more than 30°, but less than 43°, preferably 37°, entirely depending on the applied lacquer's index of refraction and its dulling medium mixed. It is to be noted that the vector bundles 20 and 21 going out of the screen 4 include rays of light having mutually deflected directions, which neutralize the change of colour within an angular range of ±10° relative to the normal. This phenomenon is based on the light diffusing function of the layer 22 of lacquer, which causes mixing and intersecting of rays of light.

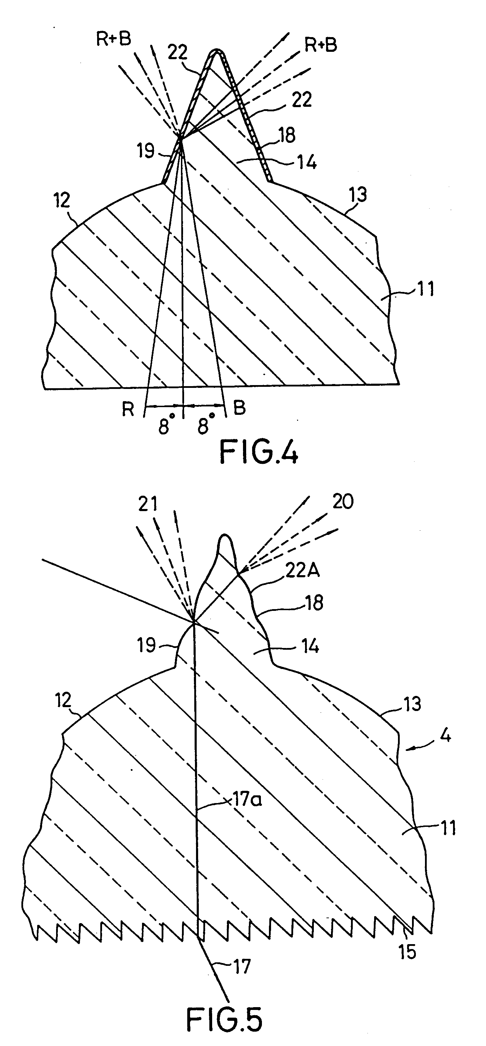

Fig. 4 shows the path of rays of light from two projectors, red (R) and blue (B) respectively. The projectors have in Fig. 4 a mutual angle of 16° between their optical axes. When the rays have passed the coated layer 22, the red and the blue rays (R, B) are mixed.

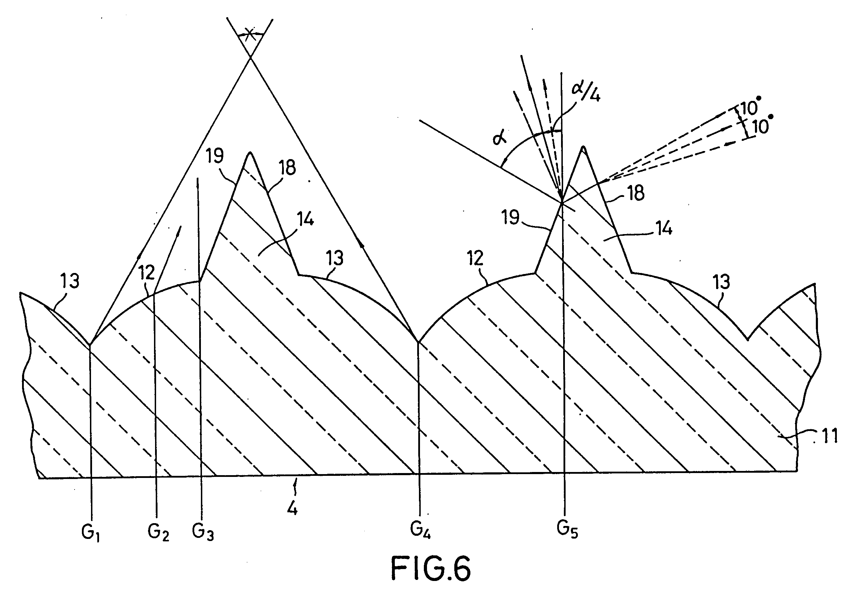

Fig. 5 shows another embodiment of the present invention in which the flanks 18 and 19 of the lens 14 are caused to have irregular surface shape or a sinusoidal surface 22A. The pitch of the waves of the sinusoidal surface however should not exceed three times as much as, and should be greater than the mean value of the longest wavelength of the light. Because such an irregular or sinusoidal surface has a number of normals in different directions relative to the major plane of the flanks 18 and 19, a variety of refracted rays of light 20 and 21 having deviated directions are obtained which neutralizes the change of colours. It will be understood that in Fig. 5 the irregularities are shown exaggerated and are actually minute ones.

The irregular surface of the flanks 18 and 19 may be a mat surface. The mat surface is preferably made with a tool made with an artificial diamond, which, due to its granular structure, will leave an irregular surface identical to the size of the grains on the diamond. The minute irregularities of the matted surface will split up or mix refracted rays of light and eliminates dominating preferential direction of the light beam of each colour.

When the tool has been thus manufactured, it gets surface treatment described below. There are two alternatives:
A: In a container containing a chemical fluid, aluminium oxide with a thickness of 10-20 µm is applied (gives a slightly mat surface), and is then sealed.
B: In a container with the chemical fluid, the tool is corroded for 10-20 seconds, then aluminium oxide with a thickness of 10-20 µm is applied, and is finally sealed.

The advantage of the processes A and B are as follows:
A: The surface of the tool becomes hard.
B: The surface prevents inconvenient reflections from the outside (front side) of the screen.

The surface treatments A and B will give the same result as a coating.

The screen 4 may include a light refracting medium mixed evenly therein or in one of the sides of the screen. The medium is an organic or inorganic pigment which serves to eliminate the colour shadow.

In Fig. 6, a division of the path of rays of green light through the upright lenses 12, 13 and 14 is shown. As can be seen in Fig. 6, the ray G₃ will not be deflected, because the surface, where the ray leaves the acrylic screen 4, is at right angle to the normal to the surface. However, the rays G₁, G₂ and G₄ will undergo a deflection in accordance with index of refraction for the concerned screen material. If radius of curvature of the lenses 12, 13 is increased further, these lenses will involve total reflection. The path of rays in the lens 14 has previously been described, and it is evident in Fig. 6 that the lenses 12, 13 and 14 will supplement each other in such a manner that the viewing angle will be approx. 150°.

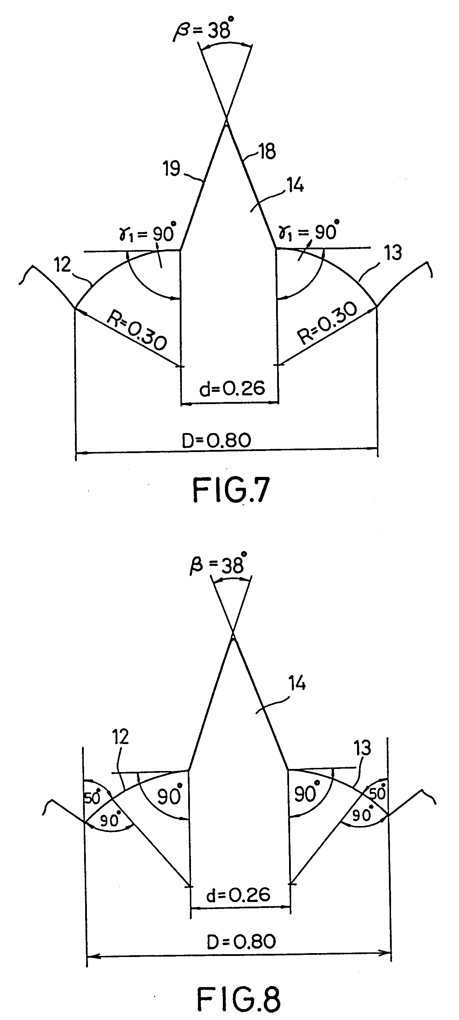

Fig. 7, 8 and 9 show practical examples of rear-projection screens according to the present invention.

### Example 1

By means of a tool or mould with a profile as illustrated in Fig. 7, a 3 mm thick plate of PMMA with 20 g SiO₂ per m² and with a grain size of 5-35 µm was cast. The distance D between the tops of the lenses 14 was 0.80 mm. The radius R of curvature of the lenses 12 and 13 was 0.30 mm, the angle β was 38°. Moreover, the distance d between the flanks 18 and 19, where these meet radius of curvature of the lenses 12 and 13, was 0.26 mm. Further, the angle γ₁ - between the radius and the tangent for the lenses 12 and 13, where these meet the lens 14 - was 90°. After being cast, the screen was coated with a lacquer, index of refraction 1.50, and 25 g wax as well as 15 g CaCO₃ per liter lacquer was added.

The screen showed the following parameters:
Peak gain: 5.6
1/2 horizontal peak gain: 38°
1/2 vertical peak gain: 7.5°.

Peak gain means the direct transparent light measured as normal to the surface in comparison to a known reference (MgCO₃).

The screen showed good efficiency so that the picture was made visible over a big visual angle, considerably exceeding ±75°. Further the screen showed an extreme colour unity.

### Example 2

In this example the design as illustrated in Fig. 8 was applied, showing that the lenses 12 and 13 are not an entire sector of a circle, but both have plane surfaces, where these meet each other. This design is suitable for projection-TV in particular, where the optical axes between the projectors differ more than 8°. Process of manufacture was very much identical to the one mentioned under example 1.

The following parameters were measured:
Peak gain: 5.8
1/2 horizontal peak gain: 36°
1/2 vertical peak gain: 8°.

In order to further increase the diffusion of the light in both vertical and horizontal direction for rear-projection screens, it is advisable to add a diffusing medium. Such a medium could e.g. be SiO₂, CaCO₃, BaSO₄ as well as fine powdered glass with an index of refraction 0.05-0.07 larger or smaller than the basic material, which could be an acrylic resin (Polymethyl Metacrylate) with an index of refraction of 1.49.

### Example 3

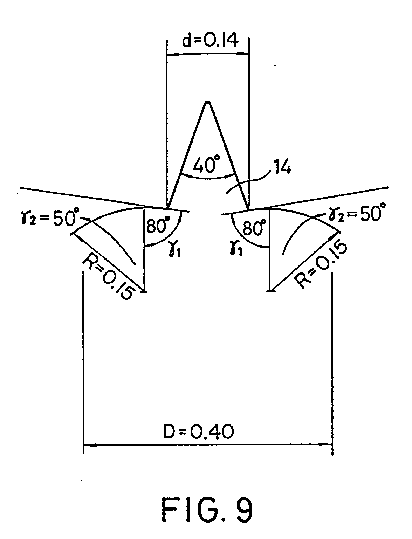

In Fig. 9 is shown a design with the following specifications: angle β of the lens 14, 40°; angle γ₁ = 80°; R = 0.15 mm; Distance D = 0.40 mm; γ₂ = 50°; d = 0.14 mm. The significant modifications in this design, compared to previous examples, is the modification of the angle γ₁ from 90° to 80°. This modification will subdue the direct transparent light, i.e. light within the measuring angular range of ±8°, so that the screen will now have a lower peak gain, but a more even distribution of light.

The screen indicated the following values:
Peak gain: 4.2
1/2 horizontal peak gain: 36°
1/2 vertical peak gain: 8°.

This screen showed the best colour purity of all 3 examples.

## Claims

1. A transparent rear projection screen (4) which is provided on its rear side with a set of lenses (15) for paralleling light projected thereon and which is provided on its front side with an array of parallel elongate upright ridges (14) of triangular cross section and having light diffusing means (22, 22A) on their flanks (18, 19), said ridges being separated by pairs of cylindrical convex lenses (12, 13) in such a way that each ridge (14) lies between two convex lenses (12, 13) placed symmetrically on its both sides,
said screen being characterized in that the optical planes of said cylindrical lenses (12, 13) are inclined with respect to the major plane of the screen so that the junction lines between the flanks (18, 19) of said ridges (14) and the thereto adjacent cylindrical lenses (12, 13) are at a larger distance from the rear side of the screen than the junction lines between two adjacent cylindrical lenses (12, 13).

2. A screen according to Claim 1 in which the angle between the planes tangent to said cylindrical lenses (12, 13) at the junction of the triangular ridges and an axis normal to the major plane of plane of the screen is 90°.

3. A screen according to Claim 1 in which the angle between the planes tangent to said cylindrical lenses (12, 13) at the junction of the triangular ridges and an axis normal to the major plane of the screen is 80°.

4. A screen according to Claim 2 or 3 in which each of said cylindrical lenses (12, 13) has a curved surface portion and a plane surface portion, said portions extending in the elongate direction parallel to each other and being smoothly connected to each other, and wherein for each of said cylindrical lenses (12, 13) said plane surface portion is adjacent to said junction line between two cylindrical lenses.

5. A screen according to any one of Claims 1 to 4, wherein the light diffusing means is a semi-reflecting layer (22) of lacquer applied to the surfaces of the flanks (18,19) of the triangular shaped ridges (14).

6. A screen according to Claim 5, wherein wax and CaCO₃ are added to said layer (22) and the index of refraction of the wax and CaCO₃ differs from that of the material of the screen.

7. A screen according to any one of Claims 1 to 4, wherein the light diffusing means is an irregular surface (22A) formed on the flanks (18,19) of the triangular-shaped ridges (14).

8. A screen according to Claim 7, wherein the irregular surface (22A) is a matted surface.

9. A screen according to any one of Claims 1 to 8, wherein a light refracting substance is incorporated in the screen.

10. A screen according to Claim 9, wherein the light refracting substance is evenly distributed in the screen or in the front side of the screen.

11. A screen according to Claim 9 or 10, wherein the light refracting substance is an organic or inorganic pigment.

## Patentansprüche

1. Transparenter Durchlichtprojektionsschirm (4), der auf seiner Rückseite mit einem Satz Linsen (15) zum Parallelisieren von darauf projiziertem Licht und auf seiner Vorderseite mit einer regelmäßigen Anordnung von parallelen, langgestreckten, aufrechten Rücken bzw. Stegen (14) vorgesehen ist, die einen dreikantigen Querschnitt und Lichtstreumittel (22, 22A) auf ihren Flanken (18, 19) aufweisen, wobei die Stege durch Paare von zylindrischen konvexen Linsen (12, 13) in einer solchen Weise voneinander getrennt sind, daß jeder Steg (14) zwischen zwei konvexen Linsen (12, 13) liegt, die auf dessen beiden Seiten symmetrisch angeordnet sind, **dadurch gekennzeichnet**, daß die optischen Ebenen der zylindrischen Linsen (12, 13) in Bezug auf die Hauptebene des Schirmes so geneigt sind, daß die Verbindungslinien zwischen den Flanken (18, 19) der Stege (14) und den hierzu benachbarten zylindrischen Linsen (12, 13) in einem größeren Abstand von der Rückseite des Schirmes liegen als die Verbindungslinien zwischen zwei benachbarten zylindrischen Linsen (12, 13).

2. Schirm nach Anspruch 1, bei welchem der Winkel zwischen den zu den zylindrischen Linsen (12, 13) tangentialen Ebenen an der Verbindungs- bzw. Schnittstelle der dreikantigen Stege und einer Achse normal zu der Hauptebene des Schirms 90° beträgt.

3. Schirm nach Anspruch 1, bei welchem der Winkel zwischen den zu den zylindrischen Linsen (12, 13) tangentialen Ebenen an der Verbindungs- bzw. Schnittstelle der dreikantigen Stege und einer Achse normal zu der Hauptebene 80° beträgt.

4. Schirm nach Anspruch 2 oder 3, bei welchem jede der zylindrischen Linsen (12, 13) einen gekrümmten Oberflächenteil und einen ebenen Oberflächenteil aufweist, wobei sich diese Teile in der langgestreckten Richtung parallel zueinander erstrecken und miteinander glatt bzw. stetig verbunden sind, und bei welchem sich der ebene Oberflächenteil jeder der zylindrischen Linsen (12, 13) angrenzend an die Verbindungslinie zwischen zwei Zylinderlinsen befindet.

5. Schirm nach einem der Ansprüche 1 bis 4, bei welchem die Lichtstreumittel eine halbreflektierende Schicht (22) aus einem Lack bestehen, der auf die Oberflächen der Flanken (18, 19) der dreikantig geformten Stege (14) aufgebracht ist.

6. Schirm nach Anspruch 5, bei welchem Wachs und CaCO₃ dem Lack (22) hinzugefügt sind und der Brechungsindex des Wachses und von CaCO₃ von dem des Schirmmaterials verschieden ist.

7. Schirm nach einem der Ansprüche 1 bis 4, bei welchem die Lichtstreumittel von einer unregelmäßigen Oberfläche (22A) gebildet werden, die auf den Flanken (18, 19) der dreikantig geformten Stege (14) ausgebildet sind.

8. Schirm nach Anspruch 7, bei welchem die unregelmäßige Oberfläche (22A) eine mattierte Oberfläche ist.

9. Schirm nach einem der Ansprüche 1 bis 8, bei welchem die Lichtbrechsubstanz in dem Schirm enthalten ist.

10. Schirm nach Anspruch 9, bei welchem die Lichtbrechsubstanz in dem Schirm oder auf der Vorderseite des Schirms gleichmäßig verteilt ist.

11. Schirm nach Anspruch 9 oder 10, bei welchem die Lichtbrechsubstanz ein organisches oder anorganisches Pigment ist.

## Revendications

1. Ecran (4) pour projection par l'arrière par transparence, qui est doté, sur sa face arrière, d'un ensemble de lentilles (15) servant à rendre parallèle la lumière projetée sur cet ensemble et qui est doté, sur sa face avant, d'un groupement de nervures (14) allongées parallèles verticalement dressées à section droite triangulaire et ayant des moyens de diffusion de lumière (22, 22A) sur leurs flancs (18, 19), lesdites nervures étant séparées par des paires de lentilles cylindriques convexes (12, 13) de telle manière que chaque nervure (14) se trouve entre deux lentilles convexes (12, 13) symétriquement disposées de part et d'autre de celle-ci, ledit écran étant caractérisé en ce que les plans optiques desdites lentilles cylindriques (12, 13) sont inclinés par rapport au plan principal de l'écran de façon que les lignes de jonction entre les flancs (18, 19) desdites nervures (14) et les lentilles cylindriques (12, 13) qui leur sont adjacentes se trouvent à une plus grande distance de la face arrière de l'écran que les lignes de jonction entre deux lentilles cylindriques adjacentes (12, 13).

2. Ecran selon la revendication 1, dans lequel l'angle entre les plans tangents audites lentilles cylindriques (12, 13), à la jonction des nervures triangulaires, et un axe perpendiculaire au plan principal de l'écran, est de 90°.

3. Ecran selon la revendication 1, dans lequel l'angle entre les plans tangents audites lentilles cylindriques (12, 13), à la jonction des nervures triangulaires, et un axe perpendiculaire au plan principal de l'écran, est de 80°.

4. Ecran selon la revendication 2 ou 3, dans lequel chacune desdites lentilles cylindriques (12, 13) possède une partie de surface courbe et une partie de surface plane, lesdites parties s'étendant, suivant la direction allongée, parallèlement l'une à l'autre et se raccordant entre elles de manière régulière, et où, pour chacune desdites lentilles cylindriques (12, 13), la partie de surface plane est adjacente à ladite ligne de jonction entre deux lentilles cylindriques.

5. Ecran selon l'une quelconque des revendications 1 à 4, où le moyen de diffusion de lumière est une couche semiréfléchissante (22) de laque appliquée aux surfaces des flancs (18, 19) des nervures (14) de forme triangulaire.

6. Ecran selon la revendication 5, où on ajoute à ladite laque (22) de la cire et CaCO₃, et l'indice de réfraction de la cire et de CaCO₃ diffère de celui du matériau de l'écran.

7. Ecran selon l'une quelconque des revendications 1 à 4, où le moyen de diffusion de lumière est une surface irrégulière (22A) formée sur les flancs (18, 19) des nervures (14) de forme triangulaire.

8. Ecran selon la revendication 7, où la surface irrégulière (22A) est une surface matée.

9. Ecran selon l'une quelconque des revendications 1 à 8, où une substance réfractant la lumière est incorporée dans l'écran.

10. Ecran selon la revendication 9, où la substance réfractant la lumière est uniformément distribuée dans l'écran ou sur la face avant de l'écran.

11. Ecran selon la revendication 9 ou 10, où la substance réfractant la lumière est un pigment organique ou inorganique.
